# EUROPEAN PATENT SPECIFICATION

(11) **EP 2 330 842 B1**
(45) Date of publication and mention of the grant of the patent: **08.08.2012**
(21) Application number: 09290892.0
(22) Date of filing: 01.12.2009
(51) Int. Cl.: H04W 8/26, H04W 16/12

(54) **Physical cell identifier assignment in cellular networks**
Zuweisung von einem physikalischen Zellidentifikator in zellulären Netzwerken
Affectation d'identification physique de cellule dans des réseaux cellulaires

(43) Date of publication of application: 08.06.2011
(73) Proprietor: Alcatel Lucent, 75007 Paris (FR)
(72) Inventor: Eckhardt, Harald, 70195 Stuttgart (DE)
(74) Representative: Wetzel, Emmanuelle

(56) References cited:
- US-A- 5 247 699
- ETRI: "PCI Assignment of HeNB based on HeNB GW" 3GPP DRAFT; R3-091804, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090820, 20 August 2009 (2009-08-20), XP050353175 [retrieved on 2009-08-20]
- NOKIA SIEMENS NETWORKS ET AL: "Solution(s) to the 36.902Â s Automated Configuration of Physical Cell Identity Use Case" 3GPP DRAFT; R3-080812 (PHYID AUTOCONF), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Shenzhen, China; 20080326, 26 March 2008 (2008-03-26), XP050164010 [retrieved on 2008-03-26]

## Description

### Field of the Invention

The invention relates to the field of telecommunications, and, more particularly, to the assignment of cell identifiers to the cells of a cellular network.

### Background

This section introduces aspects that may be helpful in facilitating a better understanding of the invention. Accordingly, the statements of this section are to be read in this light and are not to be understood as admissions about what is in the prior art or what is not in the prior art.

In cellular networks, e.g. of the LTE (3GPP Long Term Evolution) standard, a physical cell identifier (PCI) needs to be assigned to every cell. The term "cell" is used herein in conformity with the 3GPP standard, i.e. two or more cells may be attributed to the same site / base station. In the LTE standard, the PCI is 'short' and has to be re-used, as there are only 504 values for the PCI available. Two requirements have to be met when assigning the PCIs to the cells: First, the assignment of the cell identifiers to the cells has to be collision-free, i.e. directly neighboured cells need different PCIs. This is a fundamental requirement to avoid trouble in the physical layer of the radio link. Second, the assignment should be confusion-free, i.e. for each cell it is desirable that all of its direct neighbours have different cell identifiers. This requirement has to be met due to the fact that e.g. neighbour measurements are only tagged with the short cell identifier.

In principle, the PCIs may be assigned by a global planning process or by negotiations with the neighbours about free and used PCIs, thus deciding which cell takes which identifier. However, the negotiation / global planning requires considerable (signalling) effort. Other solutions which may work without communication or knowledge about the neighbours (e.g. using a random attribution) do not guarantee a collision-free and confusion-free assignment of the identifiers.

US 5 247 699 A discloses a frequency reuse plan for a cellular radio communications system including a plurality of antenna sites which implement twelve groups of frequencies among four antenna sites. The same frequencies are reused by other groups of four antenna sites. Each antenna site serves three hexagon shaped cells arranged in a clover-leaf shaped pattern by three groups of antennas, each of which group is separated by a pointing angle of 120 degrees.

The article "A PCS based architecture for tactical mobile communications" by E. Cayirci et al., Computer Networks, vol. 35, no. 2-3, February 2001, pages 327-350, proposes a novel resource management technique called virtual cell layout (VCL) which can be operated in hostile environments. In VCL, the area of communications is tessellated with regularly shaped fixed size virtual cells. The radio resources such as frequency carriers and scrambling codes are assigned to the fixed cells of this layout. The real cells, which do not have to be identical in size to the virtual cells, are mobile over VCL.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention relates to a method for assigning a cell identifier to a cell of a cellular network, the method comprising the steps of: a) generating a grid with a regular arrangement of tiles, the grid corresponding to an area where the cells of the cellular network are located; b) generating a pattern comprising a number of different cell identifiers; c) assigning a cell identifier of the pattern to each tile of the grid by repeatedly shifting the pattern, and d) assigning a cell identifier of one of the tiles to the cell based on a site location of the cell, wherein step a) is performed taking a spread range into account, the spread being defined as a ratio of a maximum distance of detectability for confusion-free assignment of the cell identifier to the cell to a minimum deployment distance, i.e. to a minimum distance between the site locations of the cells, for collision-free assignment of the cell identifier to the cell.

The (regular) grid may be considered as a representation / mapping of the area of the earth where the cells of the cellular network are arranged. The surface area and thus the grid may be considered in a simplified way to be a planar surface, it being also possible to use a. more sophisticated algorithm in which both the surface area and the grid are devised as three-dimensional (spherical) surfaces. Once the grid is established, a cell identifier is attributed to each tile of the grid based on a pattern of different cell identifiers which is repeatedly shifted (as a whole) to cover all the tiles of the grid. Once the cell identifiers have been attributed to the tiles, a cell identifier is attributed to each cell based on at least one property of the cell with respect to the grid, in particular a geo-location of the cell with respect to the grid.

Using the above approach, for cells which are deployed in the grid such that their mutual distance is not smaller than a minimum deployment distance which typically is related to a given tile size, a collision-free assignment of cell identifiers can be guaranteed. Furthermore, depending on a maximum distance of detectability (detection diameter) of the different cells, the overall number of different cell identifiers used for the pattern may be chosen such that confusion-free assignment of the cell identifiers to the cells may be guaranteed. In other words, when the surface area of a cell is represented by a circle, the diameter of the circle may vary between the minimum deployment distance and the maximum distance of detectablility and the assignment will be both collision-free and confusion-free. The ratio of the maximum distance of detectability to the minimum deployment distance (also referred to as "spread") is thus a measure of the range in which the diameter of the cell may vary, still ensuring both collision-free and confusion-free assignment of the cell identifiers to the cells.

The basic algorithm as described above does not require any communication between the cells, provided that the same - or a compatible - algorithm is applied to each cell. The algorithm assigns a PCI to each cell in a static way, independently of the presence of the neighbours, i.e. only based on static properties like the cell or site location (geo coordinates) and the maximum diameter where a cell can be detected by other cells. The scenarios are worst-case, such that, under the assumptions made, 'collision-free' and 'confusion free' assignment can be guaranteed.

The basic algorithm as described herein may be used to assign a "default value" if the current node / cell is the first node / cell or before communication with the neighborhood is established, in particular in the context of self-organizing or self-configuring networks. The basic algorithm as described herein may also be used as a building block for more elaborated algorithms.

In the inventive method, step a) is performed for a grid having a plurality of grid layers, each grid layer having tiles of a different tile size. Typically, the shapes of tiles of the different layers are identical, the tiles of the layers only differing in their scaling. Using more than one grid layer may be advantageous if a desired spread can only be reached with a high number of different identifiers when using a single-layer grid. Using more than one layer may reduce the number of different identifiers required for reaching the desired spread. For instance, a first layer (n=1) may be used for a spread covering a spread range from 1 to d/a, a second layer for a spread range from d/a to (d/a)², an N-th layer covering a spread from (d/a)^{N-1} to (d/a)^{N}, such that in total, using N layers, a spread range from 1 to (d/a)^{N} may be covered.

In one variant, the method comprises selecting a grid layer for the assignment based on the size of the cell. Typically, an appropriate grid layer is selected based on the cell size, e.g. based on the diameter of the cell, such that the diameter of the cell lies in a spread range which is covered by that grid layer.

The number of grid layers used for generating the grid may be chosen in dependence of a maximum number of available cell identifiers and an overall spread range to be achieved by the grid. As described above, the overall spread to be achieved by the grid is related to the number of layers, but the number of layers to be chosen also depends on the maximum number of available cell identifiers.

Typically, the cell is attributed to a tile based on a (geo-)location of the cell within the grid. The cell size may be used to select an appropriate layer of the grid.

In one variant, at least one cell is part of a multi-cell site which comprises two or more co-located cells, the assignment of the cell identifiers to the co-located cells of the multi-cell site being made using an algorithm peformed at the multi-cell site. In case of directional cells (typically of a multi-cell site, e.g. a plurality of directional cells of the same base station), the attribution of an identifier to a cell may be based either on cell coordinates or on site coordinates, using a localized algorithm.

In the first case, if the assignment is done independently for each cell of the site, no communication between the cells is required, but a risk of collision with respect to the minimum deployment distance may occur. When an alignment of the cells of the same site is performed, the individual cell centers and diameters may be used to assign the identifiers individually, but aligned, possibly in different layers due to different diameter properties, it not being necessary to select neighbouring identifiers.

In the second case, i.e. when the assignment is done based on site coordinates, a site-internal communication between the co-located cells is assumed. Thus, the identifiers which are located directly around the site location (as many as there are cells per site) can be used. The identifiers may either be related to the real antenna directions or may be chosen arbitrarily. For instance, when considering a base station having three directional cells corresponding to three antenna sectors covering an angle of 120° each, the use of hexagons as tiles may be advantageous, as these already have a tri-sectorized structure. It may also be possible to rotate or mirror the identifier assignment to direct the antenna lobes in the gaps between the neighbours without affecting the distance metric too much, making the cell shapes more radio-like.

Typically, the shape of the tiles is selected such that the area where the cells are located can be paved without gaps. As stated above, the area where the cells are located may be modelled as a planar surface, or may be curved like a sphere. Examples of tile shapes which may be used for paving the area without gaps are polygons (regular or irregular), in particular triangles, squares, pentagons or hexagons, which may also be deformed (e.g. squares to rectangles or rhombuses, etc.).

A further aspect relates to an assignment device for assignment of a cell identifier to a cell of a cellular network, comprising: a grid generation unit for generating a grid with a regular arrangement of tiles, the grid corresponding to an area where a plurality of cells is located, a pattern generation unit for generating a pattern comprising a number of different cell identifiers, an identifier-to-tile assignment unit for assigning a cell identifier of the pattern to each tile of the grid by repeatedly shifting the pattern, and a tile-to-cell assignment unit for assigning a cell identifier of a tile to the cell based on a site location of the cell. The grid generation unit is adapted for taking a spread range into account, being defined as a ratio of a maximum distance of detectability for confusion-free assignment of the cell identifiers to the cells to a minimum distance between the site locations of the cells for collision-free assignment of the cell identifiers to the cells. One assignment device is typically associated with each cell, the assignment devices of different cells using the same or a compatible algorithm, such that no communication between the cells is required for establishing collision-free and confusion-free assignment of the cell identifiers to the cells.

The grid generation unit of the inventive assignment device is adapted to generate a grid having a plurality of grid layers, each grid layer having tiles of a different tile size, each layer allowing to cover a different range of spread, see the discussion given above. When two or more grid layers are used, the tile-to-cell assignment unit may be adapted for selecting a grid layer for the assignment based on the cell size. Also in this case, the grid generation unit may adapted to use a number of grid layers for generating the grid, the number being chosen in dependence of a maximum number of available cell identifiers and an overall spread range to be achieved by the grid.

In case that the cell is part of a multi-cell site which comprises two or more co-located cells, the assignment of the cell identifier to the cell may be performed at the multi-cell site (base on a site-internal communication) with the other co-located cells. As discussed above, the assignment may be performed based on cell coordinates or on site coordinates.

Also, the grid generation unit may be adapted to select the shape of the tiles such that the area where the cells are located can be paved without gaps. As stated above, various shapes are possible for the tiles, all the tiles used for paving the area where the cells are located typically having identical shape.

Another aspect of the invention relates to a base station for a cellular network, comprising: an assignment device as described above. The base station also comprises a transceiver unit which defines at least one cell, i.e. an area of radio coverage of the base station. When omni-directional cells are used, the base station is typically located in the center of the cell. When each base station of a radio network uses an assignment device of the same type (i.e. implementing the algorithm described above or a compatible one), collision-free and confusion-free assignment of a limited number of cell identifiers to the cells of the radio network may be performed.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1**: shows a schematic diagram of a base station having an assignment unit for assigning a cell identifier to at least one cell,
- **Fig. 2**: shows a schematic diagram of a grid having a plurality of tiles in the form of squares, covering an area where a plurality of cells are located,
- **Fig. 3**: shows three different layers of a multi-layer grid,
- **Fig. 5**: shows a schematic diagram for explaining the concept of a spread-over-h diagram,
- **Figs. 5a,b**: show a spread-over-h diagram which is based on squares and on hexagons, respectively, and
- **Fig. 6**: shows an overview of the influencing factors for the assignment of cell identifiers to cells using the concepts described herein.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or `controller' should not be construed to refer exclusively to hardware capable of executing software, and may implicitly include, without limitation, digital signal processor (DSP) hardware, network processor, application specific integrated circuit (ASlC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

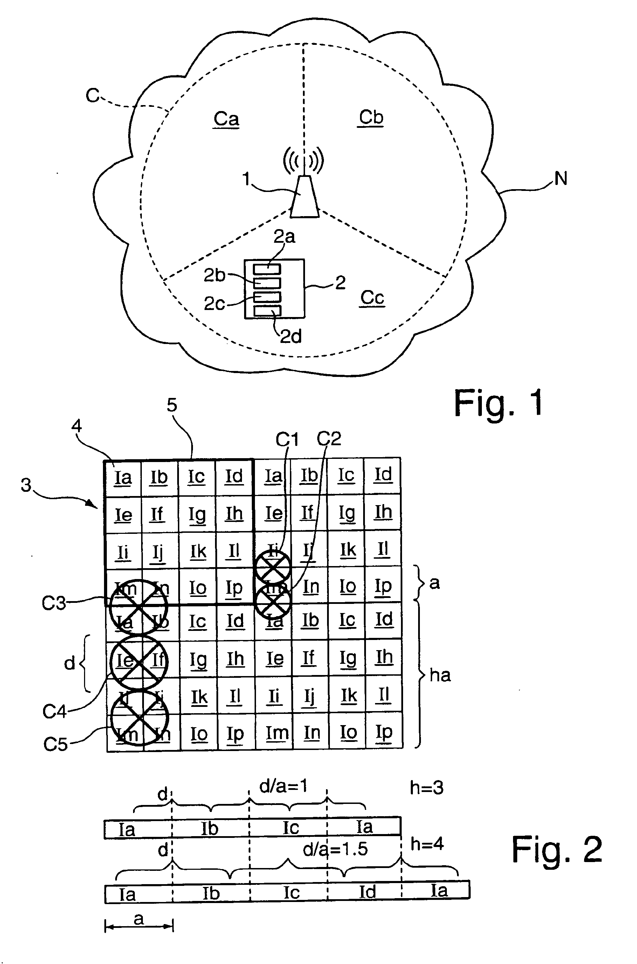

**Fig. 1** shows a base station **1** having a transceiver (not shown) which is adapted to generate an area of radio coverage (cell **C**) centered about the base station 1 and represented by a circle in Fig. 1. The cell C is part of a cellular radio network **N**, comprising a plurality of further cells (not shown). As the cells of the radio network have to be distinguished, typically, a physical cell identifier (PCI) needs to be assigned to every cell. When the number of cells in the network exceeds the number of available cell identifiers (being limited e.g. to a value of 504 when the cellular network is deployed according to the LTE (3GPP Long Term Evolution) standard), it is not possible to assign a unique cell identifier to each of the cells.

However, by using an approach which will be detailed below, collision-free and confusion-free assignment of cell identifiers to the cells of a cellular network may be performed. For providing such a collision-free and confusion-free assignment of a cell identifier to the cell C of Fig. 1, an assignment device **2** is provided, being associated with the base station 1 (either integrated in the base station 1 or operatively connected to the base station 1, e.g. via a cable connection). The assignment device 2 may be implemented in the form of a suitable hardware and/or software.

The assignment device 2 comprises a grid generation unit **2a**, the grid generation unit 2a being adapted to generate a grid **3** which is represented in **Fig. 2**. The exemplary grid 3 of Fig. 2 has a number of 8 x 8 = 64 quadratic tiles **4**, the tiles 4 being arranged in a regular arrangement (array). In the present example, the lateral dimensions of the grid 3 are chosen such that cells **C1** to **C5** are located in an area which is covered by the grid 3.

The assignment device 2 also comprises a pattern generation unit **2b** for generating a pattern **5** (represented as a square in Fig. 2) which comprises an overall number of different cell identifiers, which depends on a pattern parameter h representing the number of different cell identifiers in a row / column of the pattern. In the present example, the pattern parameter h has been chosen to be h = 4, resulting in an overall number of different cell identifiers of h x h = 16, labelled **la** to **lp** in Fig. 2. An overall edge length of the pattern 5 is h x a, **a** representing the tile size (corresponding to an edge length of the squares).

For assigning the cell identifiers la to lp to the tiles 4 of the grid 3, an identifier-to-tile assignment unit **2c** is provided in the assignment device 2. The identifier-to-tile assignment unit 2c shifts the pattern 5 both in the horizontal and in the vertical direction, such that one of the cell identifiers la to lp of the pattern 5 is assigned to each tile 4 of the grid 3.

In a further step, a tile-to-cell assignment unit 2d of the assignment device 2 is used for assigning a tile 4 of the grid 3 to each of the cells C1 to C5. The assignment is based on a location of the cells C1 to C5 with respect to the grid 3, the location of the cells C1 to C5 being defined by their center co-ordinates. As each of the tiles 4 has a cell identifier la to lp associated with it, in this way, an assignment of the cell identifiers la to lp to the cells C1 to C5 is performed.

In the present example, the cell identifier li is assigned to the first cell C1, and the cell identifier lm is assigned to the second cell C2. In a similar way, cell identifiers lm, le, and lm are assigned to the third to fifth cell C3 to C5, respectively.

For ensuring collision-free assignment of the cell identifiers la to lp to the cells C1 to C5, a minimum deployment distance a of the cells C1 to C5 which corresponds to the size of the tiles 4 must not be fallen below. As can be seen for the first and second cell C1, C2 of Fig. 2, when the mutual distance between the cells C1, C2 is smaller than the tile size a, both cells C1, C2 may be attributed to the same tile, such that the same identifier lm will be attributed to both cells C1, C2 and the assignment is no longer collision-free. Thus, the minimum deployment distance a, which, in the present example, corresponds to the diameter of the cells C1, C2, represents a lower limit for the mutual distance of the cells and thus for the diameter of the cells (assuming non-overlapping cells).

In a similar way, an upper limit for the diameter of the cells C1 to C5 which may not be exceeded for confusion-free assignment of the cell identifiers la to lp to the cells C1 to C5 is a diameter d representing the maximum distance of detectability of a cell by its neighbouring cells. In the example of Fig. 2, the fourth cell C4 will be confused by the third and fifth cells C3, C5 when the diameter of the third and fifth cell C3, C5 exceeds the maximum distance of detectability d, as in this case, the cell identifier lm which has been attributed both to the third and to the fifth cell C3, C5, may be sensed by the fourth cell C4 (see also the representation at the bottom of Fig. 2).

Thus, for a diameter of the cells C1 to C5 which varies between the tile size a and the maximum distance of detectability d, the attribution of the cell identifiers to the cells can be performed both collision-free and confusion-free. ln the example of Fig. 2, the ratio of the maximum distance of detectability d to the minimum deployment distance (the tile size a), also referred to as spread, is d/a = 1.5.

It will be understood that the spread d/a depends on the number of cell identifiers h x h used for the generation of the pattern 5. If one had chosen the pattern parameter h to be equal to three, i.e. using only nine instead of sixteen different cell identifiers, the spread d/a would have been equal to 1.0 (see the example at the bottom of Fig. 2). In this case, the diameter of the cells C1 to C5 has to be identical to the tile size a in order to guarantee both collision-free and confusion-free assignment of the cell identifiers to the cells C1 to C5. It will be understood that this is not a reasonable assumption, such that in the present example of quadratic tiles 4, the pattern parameter h should at least be equal to three.

For the quadratic tiles 4 of the grid 3 shown in Fig. 2, the spread d/a is related to the pattern parameter h by the following formula: d/a = (h-1) / 2, the total number of different cell identifiers being given by h x h in this case. It will be understood, however, that the relation between the pattern parameter h and the spread d /a as well as the relation of the pattern parameter h to the overall number (h x h) of different identifiers will vary depending on the geometry / shape of the tiles 4.

Regarding the shape of the tiles 4, a large variety of geometries may be used, provided that the shape is chosen such that the (surface) area where the cells are located may be paved without gaps. Examples of tile shapes which may be used for paving a (planar or possibly spherical) surface without gaps are polygons (regular or irregular), in particular triangles, squares, pentagons or hexagons, which may also be deformed (e.g. squares to rectangles or rhombuses).

As discussed above, the spread d/a which can be achieved with the grid 3 of Fig. 2 is related to the pattern parameter h as follows: d / a = (h ― 1) / 2. Thus, if a large spread d/a is desired, a high number (h x h) of different identifiers may be needed when using a grid 3 having only a single layer.

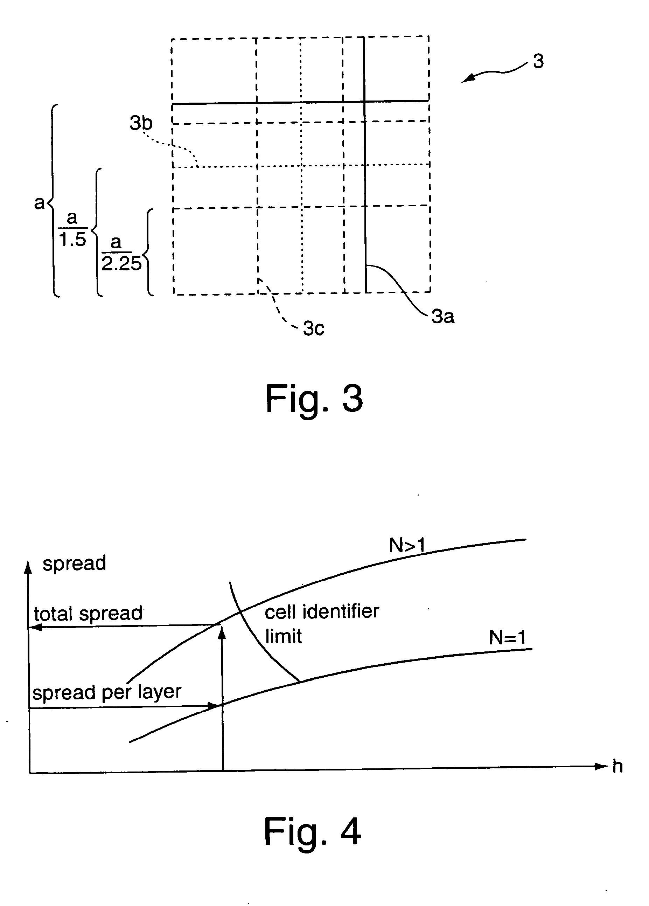

For reducing the number of identifiers needed for reaching a certain spread, a grid 3 as shown in Fig. 3 may be used, the grid 3 comprising different grid layers 3a to 3c (three in the present example), the tiles 4 of the different grid layers 3a to 3c having different tile sizes. In the example shown in Fig. 3, the first layer 3a has a tile size a, the second layer 3b has a tile size of a / 1.5, and the third layer 3c has a tile size of a / 2.25.

Supposing that the pattern parameter h is equal to four (h = 4), the first layer 3a covers a spread d / a from 1 to (h - 1) / 2 = 1.5, the second layer 3b covers a spread from 1.5 to 1.5², and the third layer 3c covers a spread from 1.5 to 1.5³. Thus, using the grid 3 of Fig. 3, an overall spread from 1 to (1.5)³ may be covered. In a more general way, a first layer (n=1) may be used for a covering a spread range from 1 to d/a, a second layer may be used for covering a spread range from d/a to (d/a)², ..., and an N-th layer may be used for covering a spread range from (d/a)^{N-1} to (d/a)^{N}, such that in total, an overall spread from 1 to (d/a)^{N} may be covered using a number of N layers.

Thus, the choice of the total number N of layers which are used for generating a grid may be made in dependence of the maximum number of available cell identifiers and an overall spread to be achieved with the grid. A simple way of visualizing the criteria for the selection is by using a spread-over-h diagram, a simplified version of which is shown in **Fig. 4**. In the diagram of Fig. 4, the spread provided by the first layer (N=1) is shown in dependence of the pattern parameter h. For each subsequent layer N > 1, the total spread to be achieved by the grid is shown. An additional condition for selecting the number N of layers for reaching a desired spread is that the total number of different cell identifiers, represented in the spread-to-h diagram by a curve called "cell identifier limit" is not exceeded, i.e. for a given overall number of different cell identifiers, one has to stay below the corresponding "cell identifier limit" curve.

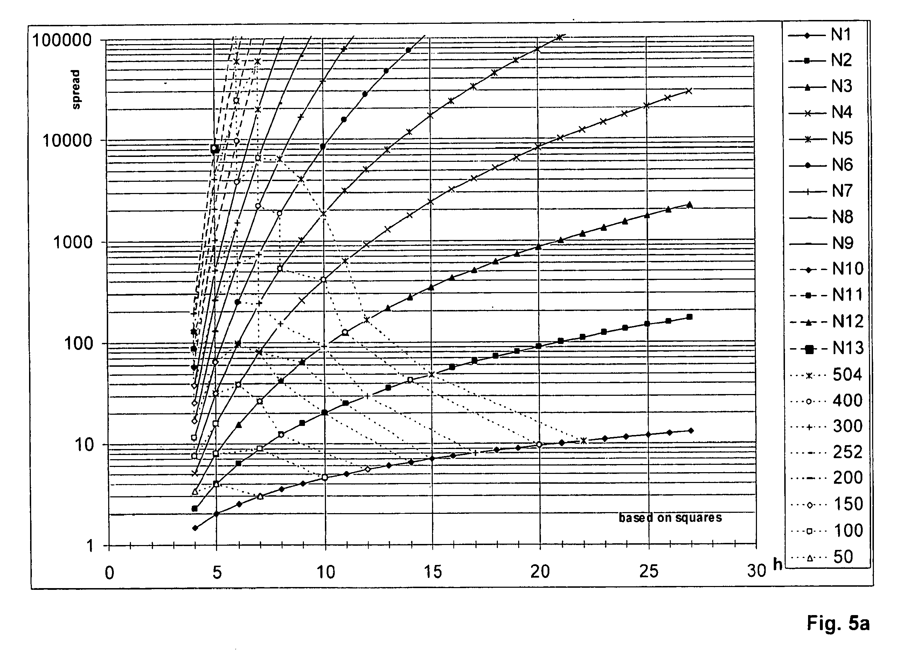

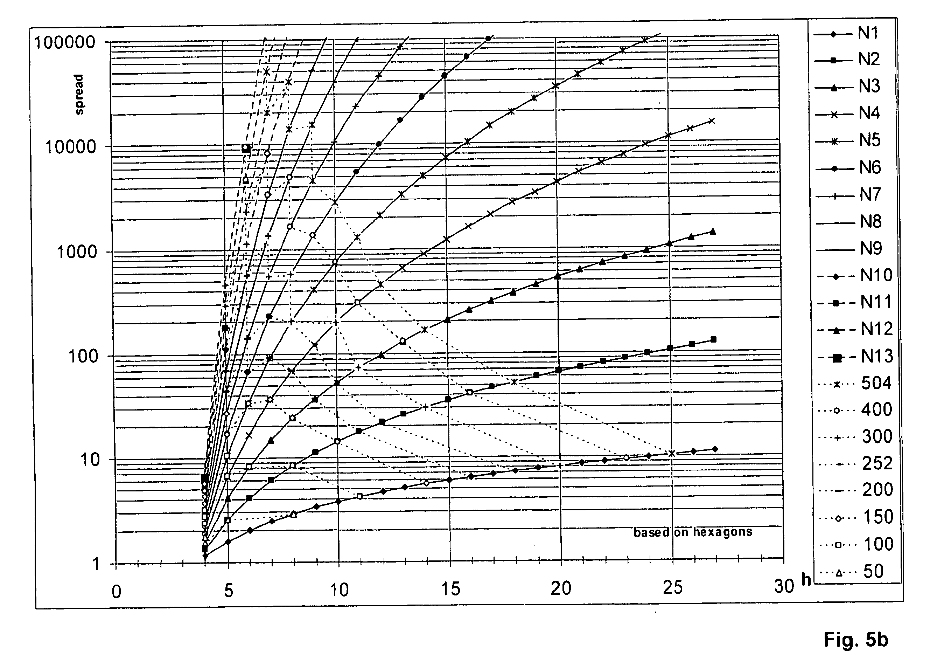

A spread-over-h diagram for tiles in the form of squares is represented in **Fig. 5a** for a number N of layers ranging from 1 to 14. The curves representing the "cell identifier limit" are shown for different values ranging from 50 to 504. The value of 504 different cell identifiers corresponds to the maximum number of PCls which may be used in the LTE standard. **Fig. 5b** shows a corresponding diagram for tiles in the form of hexagons. It will be understood that calculations for tiles in the form of hexagons can be performed in an analogous way as calculations for tiles in the form of squares. For an introduction to calculations with hexagons, reference is made to the article "The Cellular Concept" by V.H. MacDonald, The Bell System Technical Journal, vol. 58, Jan. 1979, pp.15 - 41. One skilled in the art will appreciate that the concepts described herein are not limited to tiles in the form of squares or hexagons, but may equally well be applied to tiles with other geometries.

It will be appreciated that in cellular networks, multi-cell sites may be present, i.e., instead of a single omni-directional cell C, two or more cells may be co-located at the same base station 1, e.g. in the form of directional cells Ca to Cc, each covering an angle of 120°, as shown in Fig. 1. As the directional cells Ca to Cc are served by the same base station 1, the assignment of the cell identifiers to the co-ordinated cells Ca to Cc of the multi-cell site C may be performed taking an alignment of the co-ordinated cells Ca to Cc into account. In other words, the attribution of the cell identifiers to the co-ordinated cells Ca to Cc may be performed using a local algorithm, either based on cell coordinates or on site coordinates, possibly using local communication between the cells Ca to Cc of the multi-cell site.

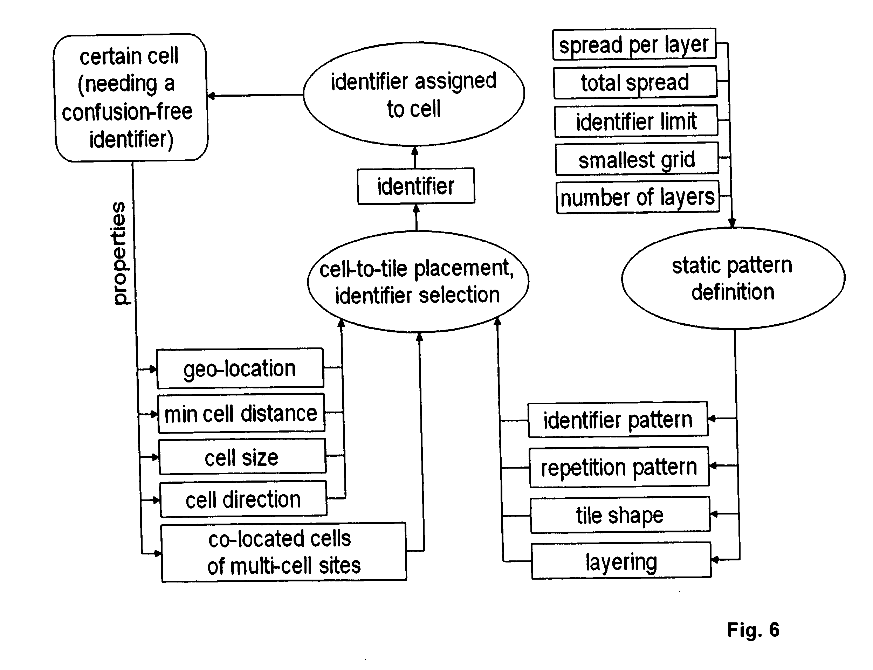

The overall process for performing the identifier assignment depends on a plurality of interacting parameters, an overview being given in the diagram shown in **Fig. 6****.** In particular, apart from the location of the cells, further properties of the cells may be involved in the assignment process, in particular a cell size which may be used for assigning the cell to an appropriate grid layer. Further cell parameters include (but are not limited to): an attribution of the cell to a multiple-cell site, and a direction of the cell (when directional cells / transceivers are used).

In summary, in the way described above, confusion-free and collision-free assignment of cell identifiers to the cells of a radio network may be performed without the need for signaling between cells. Thus, using the above approach, a cell does not have to know anything about its neighbors, the only pre-requisite for the confusion-free and collision-free assignment being that the cells involved in the assignment use the same or a compatible algorithm.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for assigning a cell identifier (Ia to Ip) to a cell (C; C1 to C5) of a cellular network (N), the method comprising the steps of:
a) generating a grid (3) with a regular arrangement of tiles (4), the grid (3) corresponding to an area where the cells (C; C1 to C5) of the cellular network (N) are located,
b) generating a pattern (5) comprising a number (h x h) of different cell identifiers (Ia to Ip),
c) assigning a cell identifier (Ia to Ip) of the pattern (5) to each tile (4) of the grid (3) by repeatedly shifting the pattern (5), and
d) assigning the cell identifier (Ia to Ip) of one of the tiles (4) to the cell (C; C1 to C5) based on a site location of the cell (C; C1 to C5), wherein step a) is performed taking a spread range (1 to d/a) into account, the spread (d/a) being defined as a ratio of a maximum distance of detectability (d) to a minimum distance (a) between the site locations of the cells (C; C1 to C5),
**characterized in that**
step a) is performed for a grid (3) having a plurality of grid layers (3a to 3c), each grid layer (3a to 3c) having tiles (4) of a different tile size.

2. Method according to claim 1, wherein step d) comprises selecting a grid layer (3a to 3c) for the assignment based on the size of the cell (C; C1 to C5).

3. Method according to claim 1, wherein the number (N) of grid layers (3a to 3c) used for generating the grid (3) is chosen in dependence of a maximum number of available cell identifiers and an overall spread range (1 to (d/a)^{N}) to be achieved by the grid (3).

4. Method according to any one of the preceding claims, wherein at least one cell (Ca to Cc) is part of a multi-cell site (C) which comprises two or more co-located cells (Ca to Cc), the assignment of the cell identifiers to the co-located cells (Ca to Cc) of the multi-cell site (C) being made using an algorithm performed at the multi-cell site (C).

5. Method according to any one of the preceding claims, wherein the shape of the tiles (4) is selected such that the area where the cells (C1 to C5) are located can be paved without gaps.

6. An assignment device (2) for assignment of a cell identifier (Ia to Ip) to a cell (C; C1 to C5) of a cellular network (N), comprising:
a grid generation unit (2a) for generating a grid (3) with a regular arrangement of tiles (4), the grid (3) corresponding to an area where a plurality of cells (C; C1 to C5) of the cellular network (N) is located,
a pattern generation unit (2b) for generating a pattern (5) comprising a number (h x h) of different cell identifiers (Ia to Ip),
an identifier-to-tile assignment unit (2c) for assigning a cell identifier (Ia to Ip) of the pattern (5) to each tile (4) of the grid (3) by repeatedly shifting the pattern (5), and
a tile-to-cell assignment unit (2d) for assigning the cell identifier (Ia to Ip) of one of the tiles (4) to the cell (C; C1 to C5) based on a site location of the cell (C; C1 to C5), wherein
the grid generation unit (2a) is adapted for taking a spread range (1 to d/a) into account, the spread (d/a) being defined as a ratio of a maximum distance of detectability (d) to a minimum distance (a) between the site locations of the cells (C; C1 to C5),
**characterized in that**
the grid generation unit (2a) is adapted to generate a grid (3) with a plurality of grid layers (3a to 3c), each grid layer (3a to 3c) having tiles (4) of a different tile size.

7. Assignment device according to claim 6, wherein the tile-to-cell assignment unit (2d) is adapted for selecting a grid layer (3a to 3c) for the assignment based on a size of the cell (C; C1 to C5).

8. Assignment device according to claim 7, wherein the grid generation unit is adapted to use a number (N) of grid layers (3a to 3c) for generating the grid (3) which is chosen in dependence of a maximum number of available cell identifiers and an overall spread range (1 to (d/a)^{N}) to be achieved by the grid (3).

9. Assignment device according to any one of claims 6 to 8, wherein the cell (Ca) is part of a multi-cell site (C) which comprises two or more co-located cells (Ca to Cc), the assignment of the cell identifier (Ia to Ip) to the cell (Ca) being made using an algorithm which is performed at the multi-cell site (C).

10. Assignment device according to any one of claims 6 to 9, wherein the
grid generation unit (2a) is adapted to select the shape of the tiles (4) such that the area where the cells (C1 to C5) are located can be paved without gaps.

11. Base station (1) for a cellular network (N), comprising:
an assignment device (2) according to any one of claims 6 to 10.

## Patentansprüche

1. Verfahren zum Zuweisen eines Zellidentifikators (Ia bis Ip) an eine Zelle (C; C1 bis C5) eines zellularen Netzwerks (N), wobei das Verfahren die folgenden Schritte umfasst:
a) Erzeugen eines Gitters (3) mit einer regelmäßigen Anordnung von Plättchen (4), wobei das Gitter (3) einem Bereich entspricht, in welchem sich die Zellen (C; C1 bis C5) des zellularen Netzwerks (N) befinden,
b) Erzeugen eines Musters (5) mit einer Anzahl (h x h) von unterschiedlichen Zellidentifikatoren (Ia bis Ip),
c) Zuweisen eines Zellidentifikators (Ia bis Ip) des Musters (5) an jedes Plättchen (4) des Gitters (3) durch wiederholtes Verschieben des Musters (5), und
d) Zuweisen des Zellidentifikators (Ia bis Ip) eines der Plättchen (4) an die Zelle (C; C1 bis C5) auf der Basis eines Standorts der Zelle (C; C1 bis C5), wobei Schritt a) unter Berücksichtigung eines Spreizbereichs (1 bis d/a) durchgeführt wird, wobei die Spreizung (d/a) als ein Verhältnis der maximalen Entfernung der Nachweisbarkeit (d) zu der minimalen Entfernung (a) zwischen den Standorten der Zellen (C; C1 bis C5) definiert wird,
**dadurch gekennzeichnet, dass**
Schritt a) für ein Gitter (3) mit einer Mehrzahl von Gitterschichten (3a bis 3c) durchgeführt wird, wobei jede Gitterschicht (3a bis 3c) Plättchen (4) einer unterschiedlichen Größe aufweist.

2. Verfahren nach Anspruch 1, wobei Schritt d) das Auswählen einer Gitterschicht (3a bis 3c) für die Zuweisung auf der Basis der Größe der Zelle (C; C1 bis C5) umfasst.

3. Verfahren nach Anspruch 1, wobei die Anzahl (N) der für die Erzeugung des Gitters (3) verwendeten Gitterschichten (3a bis 3c) in Abhängigkeit von einer maximalen Anzahl von verfügbaren Zellidentifikatoren und einem von dem Gitter (3) zu erreichenden Gesamtspreizbereich (1 bis (d/a)^{N}) gewählt wird.

4. Verfahren nach einem beliebigen der vorstehenden Ansprüche, wobei mindestens eine Zelle (Ca bis Cc) Teil eines Mehrzellenstandorts (C), welcher zwei oder mehr gemeinsam angeordnete Zellen (Ca bis Cc) umfasst, ist, wobei die Zuweisung der Zellidentifikatoren an die gemeinsam angeordneten Zellen (Ca bis Cc) des Mehrzellenstandorts (C) unter Verwendung eines an dem Mehrzellenstandort (C) ausgeführten Algorithmus erfolgt.

5. Verfahren nach einem beliebigen der vorstehenden Ansprüche, wobei die Form der Plättchen (4) derart ausgewählt wird, dass der Bereich, in welchem sich die Zellen (C1 bis C5) befinden, lückenlos bestückt werden kann.

6. Zuweisungsvorrichtung (2) zum Zuweisen eines Zellidentifikators (Ia bis Ip) an eine Zelle (C; C1 bis C5) eines zellularen Netzwerks (N), umfassend:
Eine Gittererzeugungseinheit (2a) zum Erzeugen eines Gitters (3) mit einer regelmäßigen Anordnung von Plättchen (4), wobei das Gitter (3) einem Bereich entspricht, in welchem sich eine Mehrzahl von Zellen (C; C1 bis C5) des zellularen Netzwerks (N) befinden,
eine Mustererzeugungseinheit (2b) zum Erzeugen eines Musters (5) mit einer Anzahl (h x h) von unterschiedlichen Zellidentifikatoren (Ia bis Ip),
eine Identifikator-an-Plättchen-Zuweisungseinheit (2c) zum Zuweisen eines Zellidentifikators (Ia bis Ip) des Musters (5) an jedes Plättchen (4) des Gitters (3) durch wiederholtes Verschieben des Musters (5), und
eine Plättchen-an-Zelle-Zuweisungseinheit (2d) zum Zuweisen des Zellidentifikators (Ia bis Ip) eines der Plättchen (4) an die Zelle (C; C1 bis C5) auf der Basis eines Standorts der Zelle (C; C1 bis C5), wobei
die Gittererzeugungseinheit (2a) für die Berücksichtigung eines Spreizbereichs (1 bis d/a) ausgelegt ist, wobei die Spreizung (d/a) als ein Verhältnis der maximalen Entfernung der Nachweisbarkeit (d) zu der minimalen Entfernung (a) zwischen den Standorten der Zellen (C; C1 bis C5) definiert wird,
**dadurch gekennzeichnet, dass**
die Gittererzeugungseinheit (2a) für das Erzeugen eines Gitters (3) mit einer Mehrzahl von Gitterschichten (3a bis 3c) ausgelegt ist, wobei jede Gitterschicht (3a bis 3c) Plättchen (4) einer unterschiedlichen Größe aufweist.

7. Zuweisungsvorrichtung nach Anspruch 6, wobei die Plättchen-an-Zelle-Zuweisungseinheit (2d) für das Auswählen einer Gitterschicht (3a bis 3c) für die Zuweisung auf der Basis einer Größe der Zelle (C; C1 bis C5) ausgelegt ist.

8. Zuweisungsvorrichtung nach Anspruch 7, wobei die Gittererzeugungseinheit für das Verwenden einer Anzahl (N) von Gitterschichten (3a bis 3c) für die Erzeugung des Gitters (3), welches in Abhängigkeit von einer maximalen Anzahl von verfügbaren Zellidentifikatoren und von einem von dem Gitter (3) zu erreichenden Gesamtspreizbereich (1 bis (d/a)^{N}) ausgewählt wird, ausgelegt ist.

9. Zuweisungsvorrichtung nach einem beliebigen der Ansprüche 6 bis 8, wobei die Zelle (Ca) Teil eines Mehrzellenstandorts (C), welcher zwei oder mehr gemeinsam angeordnete Zellen (Ca bis Cc) umfasst, ist, wobei die Zuweisung des Zellidentifikators (Ia bis Ip) an die Zelle (Ca) unter Verwendung eines an dem Mehrzellenstandort (C) ausgeführten Algorithmus erfolgt.

10. Zuweisungsvorrichtung nach einem beliebigen der Ansprüche 6 bis 9, wobei die Gittererzeugungseinheit (2a) dazu ausgelegt ist, die Form der Plättchen (4) derart auszuwählen, dass der Bereich, in welchem sich die Zellen (C1 bis C5) befinden, lückenlos bestückt werden kann.

11. Basisstation (1) für ein zellulares Netzwerk (N), umfassend:
Eine Zuweisungsvorrichtung (2) gemäß einem der Ansprüche 6 bis 10.

## Revendications

1. Procédé pour attribuer un identifiant de cellule (Ia à Ip) à une cellule (C ; C1 à C5) d'un réseau cellulaire (N), le procédé comprenant les étapes suivantes :
a) générer une grille (3) avec une disposition régulière de mosaïques (4), la grille (3) correspondant à une zone où les cellules (C ; C1 à C5) du réseau cellulaire (N) sont situées,
b) générer un modèle (5) comprenant un nombre (h x h) d'identifiants de cellule différents (Ia à Ip),
c) attribuer un identifiant de cellule (Ia à Ip) du modèle (5) à chaque mosaïque (4) de la grille (3) en changeant de manière répétée le modèle (5), et
d) attribuer l'identifiant de cellule (Ia à Ip) d'une des mosaïques (4) à la cellule (C ; C1 à C5) en se basant sur un emplacement de site de la cellule (C ; C1 à C5), où l'étape a) est exécutée en tenant compte d'une plage d'étalement (1 à d/a), l'étalement (d/a) étant défini comme un rapport entre une distance de détectabilité maximum (d) et une distance minimum (a) entre les emplacements de site des cellules (C ; C1 à C5), **caractérisé en ce que**
l'étape a) est exécutée pour une grille (3) présentant une pluralité de couches de grille (3a à 3c), chaque couche de grille (3a à 3c) présentant des mosaïques (4) d'une taille de mosaïque différente.

2. Procédé selon la revendication 1, dans lequel l'étape d) comprend la sélection d'une couche de grille (3a à 3c) pour l'attribution sur la base de la taille de la cellule (C ; C1 à C5).

3. Procédé selon la revendication 1, dans lequel le nombre (N) de couches de grille (3a à 3c) utilisées pour générer la grille (3) est choisi en fonction d'un nombre maximum d'identifiants de cellule disponibles et d'une plage d'étalement globale (1 à (d/a)^{N}) devant être obtenue par la grille (3).

4. Procédé selon l'une quelconque des revendications précédentes, dans lequel au moins une cellule (Ca à Cc) fait partie d'un site à plusieurs cellules (C) qui comprend au moins deux cellules co-localisées (Ca à Cc), l'attribution des identifiants de cellule aux cellules co-localisées (Ca à Cc) du site à plusieurs cellules (C) étant réalisée en utilisant un algorithme exécuté au niveau du site à plusieurs cellules (C).

5. Procédé selon l'une quelconque des revendications précédentes, dans lequel la forme des mosaïques (4) est choisie de sorte que la zone où les cellules (C1 à C5) sont situées puisse être pavée sans espacements.

6. Dispositif d'attribution (2) pour attribuer un identifiant de cellule (Ia à Ip) à une cellule (C ; C1 à C5) d'un réseau cellulaire (N), comprenant :
une unité de génération de grille (2a) pour générer une grille (3) avec une disposition régulière de mosaïques (4), la grille (3) correspondant à une zone où une pluralité de cellules (C ; C1 à C5) du réseau cellulaire (N) est située,
une unité de génération de modèle (2b) pour générer un modèle (5) comprenant un nombre (h x h) d'identifiants de cellule différents (Ia à Ip),
une unité d'attribution identifiant/mosaïque (2c) pour attribuer un identifiant de cellule (Ia à Ip) du modèle (5) à chaque mosaïque (4) de la grille (3) en changeant de manière répétée le modèle (5), et
une unité d'attribution mosaïque/cellule (2d) pour attribuer l'identifiant de cellule (Ia à Ip) d'une des mosaïques (4) à la cellule (C ; C1 à C5) sur la base d'un emplacement de site de la cellule (C ; C1 à C5), dans lequel
l'unité de génération de grille (2a) est adaptée pour tenir compte d'une plage d'étalement (1 à d/a), l'étalement (d/a) étant défini comme un rapport entre une distance de détectabilité maximum (d) et une distance minimum (a) entre les emplacements de site des cellules (C ; C1 à C5),
**caractérisé en ce que**
l'unité de génération de grille (2a) est adaptée pour générer une grille (3) avec une pluralité de couches de grille (3a à 3c), chaque couche de grille (3a à 3c) présentant des mosaïques (4) d'une taille de mosaïque différente.

7. Dispositif d'attribution selon la revendication 6, dans lequel l'unité d'attribution mosaïque/cellule (2d) est adaptée pour sélectionner une couche de grille (3a à 3c) pour l'attribution sur la base d'une taille de la cellule (C ; C1 à C5).

8. Dispositif d'attribution selon la revendication 7, dans lequel l'unité de génération de grille est adaptée pour utiliser un nombre (N) de couches de grille (3a à 3c) pour générer la grille (3) qui est choisi en fonction d'un nombre maximum d'identifiants de cellule disponibles et d'une plage d'étalement globale (1 à (d/a)^{N}) devant être obtenue par la grille (3).

9. Dispositif d'attribution selon l'une quelconque des revendications 6 à 8, dans lequel la cellule (Ca) fait partie d'un site à plusieurs cellules (C) qui comprend au moins deux cellules co-localisées (Ca à Cc), l'attribution de l'identifiant de cellule (Ia à Ip) à la cellule (Ca) étant réalisé en utilisant un algorithme qui est exécuté au niveau du site à plusieurs cellules (C).

10. Dispositif d'attribution selon l'une quelconque des revendications 6 à 9, dans lequel l'unité de génération de grille (2a) est adaptée pour sélectionner la forme des mosaïques (4) de sorte que la zone où les cellules (C1 à C5) sont situées puisse être pavée sans espacements.

11. Station de base (1) pour un réseau cellulaire (N), comprenant :
un dispositif d'attribution (2) selon l'une quelconque des revendications 6 à 10.
